# EUROPEAN PATENT APPLICATION

(11) **EP 2 730 701 A2**
(43) Date of publication of application: **14.05.2014**
(21) Application number: 12466020.0
(22) Date of filing: 13.11.2012
(51) Int. Cl.: E02B 9/00, F03B 3/02, F03B 13/06, F03B 13/08, F03B 3/18, F03B 11/00

(54) **Underground pumped storage power station**

(30) Priority: 08.11.2012 CZ 20120764
(71) Applicant: Moravsky Vyzkum, s.r.o., 70200 Ostrava-Moravska Ostrava (CZ)
(72) Inventor: Simunek, Pavel, 140 00 Praha 4 (CZ); Halada, Pavel, 73601 Havirov-Mesto (CZ)

(57) **Abstract**

This invention concerns underground pumped storage power plants with the supply of the operation water medium containing the input supply and safety features to the operation area consists of and runs through hecks (3), safety barrier (4) and gate valve (5), supply pipeline (6) in decline under the natural surface and then vertically to the machine room (7), while this machine room (7), where there is the location of the pumped-storage Francis turbine machine set (8) is followed by the waste pipeline (30) to the connecting tunnel (32), from where the water flows to the individual fields (33) of the underground tank (34), with the underground tank bottom (34) is located above the top level of the runner wheel of the pumped-storage Francis turbine (10), while the pumped-storage Francis turbine (10) which is connected with the ball valve (9) via flanges is then followed by a distribution spiral (15), with guiding paddles (16) laid in its inner part circinately and their arms (17) are connected with connecting rods (18), with one of them, a drive arm (19) is extended and in a swinging way connected with a linear hydraulic drive (20), on the opposite side attached on the distribution spiral (15), while the pumped-storage Francis turbine (10) also includes a runner wheel (21) firmly connected with a vertical shaft (22) sealed with a filling (23), and its adjustment is done by two linear rotational drives (24), while each of them includes a globoid worm (25), engaged with a tightening nut (26) with toothing, while the vertical shaft (22) of the pumped-storage Francis turbine (10) is laid in a rotational way in a frame (12) in bearings (27) and it is connected through a starting clutch (28) with an electric motor generator (11), while it is axially followed in the bottom part of the pumped-storage Francis turbine (10) by a bend of the waste pipeline (29), while the supply pipeline (6), pumped-storage Francis turbine machine set (8) and the waste pipeline (31) make a power branch (42) and there may be more such power branches (42) for the purpose of increasing the power.

## Description

### The Technology Area

This invention concerns a technology of using the water energy for its accumulation and subsequently for its retrieval with the option of complementarity as a deficit compensation in the public grid while using the technology of pumped-storage Francis turbine machine set in the reversible mode of turbine - pump.

### Current State of the Technology

Currently, there are many different types of pumped storage power plants using suitable locations and different hydroelectric dams, making a natural supply of potential energy in the form of water in a reservoir above the power plant and vice versa the possibility to store energy into the water in a tank on the level of the power plant that needs to be pumped into the upper tank.

None of these alternatives of pumped storage power plant systems addresses their installation to a deep underground facility built specially for this purpose with a machine set of pumped storage power plant with its accessories installed in underground spaces with a great height potential and building a special lower retention tank, while the upper retention tank makes an artificial hydroelectric dam or natural water reservoir.

The subject of the invention is an underground pumped storage power plant that consists of artificial deep underground facility with a high-capacity retention tank built on its bottom and underground spaces for installation of the machine set of pumped storage power plant with its accessories.

### The Essence of the Invention

The mentioned disadvantages are addressed by a system of deep underground pumped storage power plant built in a vicinity of a hydroelectric dam or a natural reservoir used as the upper retention tank, this system consists of a deep underground facility where, in underground spaces with a great height potential, there is installed a machine set of pumped storage power plant with its accessories and built a special lower retention tank, such as in a system of parallel mutually connected tunnels, with the idea of equipping this underground pumped storage system with input supply and safety features in the working area and also consisting of heks, safety barrier, e.g. gate valve, supply pipeline, in decline under the natural surface or in another manner and then vertically or down-hill to the machine room, while this machine room, where there is the location of the pumped-storage Francis turbine machine set, is followed by the waste pipeline to the connecting tunnel, from where the water flows to the individual fields of the underground tank, with the underground tank bottom is located above the top level of the runner wheel, while the machine room is further connected with a transformer sub-station room with transformers, and the transformer sub-station room is connected with an access tunnel serving as a mobile connection of the machine room and transformer sub-station room and which is on the other side led to the surface to the area of the shaft tower, while a corridor is extended to the first connecting tunnel by an access corridor so the machine room is connected by this access corridor and following ascending ventilating shaft with a ventilating object, while the basic sub-sets of the pumped-storage Francis turbine machine set of an underground pumped storage power plant are a ball valve, pumped-storage Francis turbine and motor generator, that are laid in a frame, with the ball valve controlled by rotational drive through an expansion joint, while the pumped-storage Francis turbine which is connected with the ball valve via flanges is then followed by a distribution spiral with guiding paddles 16 laid in its inner part circinately and their arms are connected with connecting rods, with one of them, a drive arm, is extended and in a swinging way connected with a linear hydraulic drive, on the opposite side attached on the distribution spiral, while the pumped-storage Francis turbine also includes a runner wheel firmly connected with a vertical shaft sealed with a filling, and its adjustment is done by two linear rotational drives, while each of them includes a globoid worm, engaged with a tightening nut with toothing, while the vertical shaft of the pumped-storage Francis turbine is laid in a rotational way in a frame in bearings and it is connected through a starting clutch with an electric motor generator, while it is axially followed in the bottom part of the pumped-storage Francis turbine by a bend of the waste pipeline.

The advantage is that with the underground pumped storage power plant, the supply pipeline, pumped-storage Francis turbine machine set and the waste pipeline make a power branch and there may be more such power branches for the purpose of increasing the power.

The design and principles of the solution of the hydroelectric dam are based on the main purpose of the construction, i.e. using the water energy in the pumped storage power plant. The machine room of the pumped storage power plant, located between the upper and lower tanks includes the main technological units.

In the upper and lower tanks there are inlet and outlet objects with the technological equipment needed for the operation of the pumped storage power plant, such as hecks, gate valves and other devices controlled by the turbine automation and assuring the safe, failure-free and reliable operation.

The water supply from the upper tank is considered via an independent steel feeder, divided in its lower part to two separate feeders in the lower part before the turbines. There are ball valves at the end of the pipeline feeders and before turbines as a protection of the turbines. In the machine room there are two machine sets with reverse Francis turbines, and each of them is connected with a synchronous generator. The machine sets can work together or separately and assure the turbine or pump operation. Next to the machine room there is the room for transformation and electrical energy distribution. There is also the complete electrical part installed here including output and connection to the grid, i.e. phase matching with the grid and its compensation in the form of phase factor. Furthermore, the installed automation assumes control by central dispatching with the idea that the machine sets are designed for the production of highly valued peak energy and balancing non-stationary conditions of the grid such as frequency variation, quick power changes etc.

The solution of the underground facility is tailored to the location and it is considered with the full use of the mined rock to produce valuable building materials for building e.g. transport constructions.

### Overview of Figures on the Drawings

The attached sheets contain figures and legend.

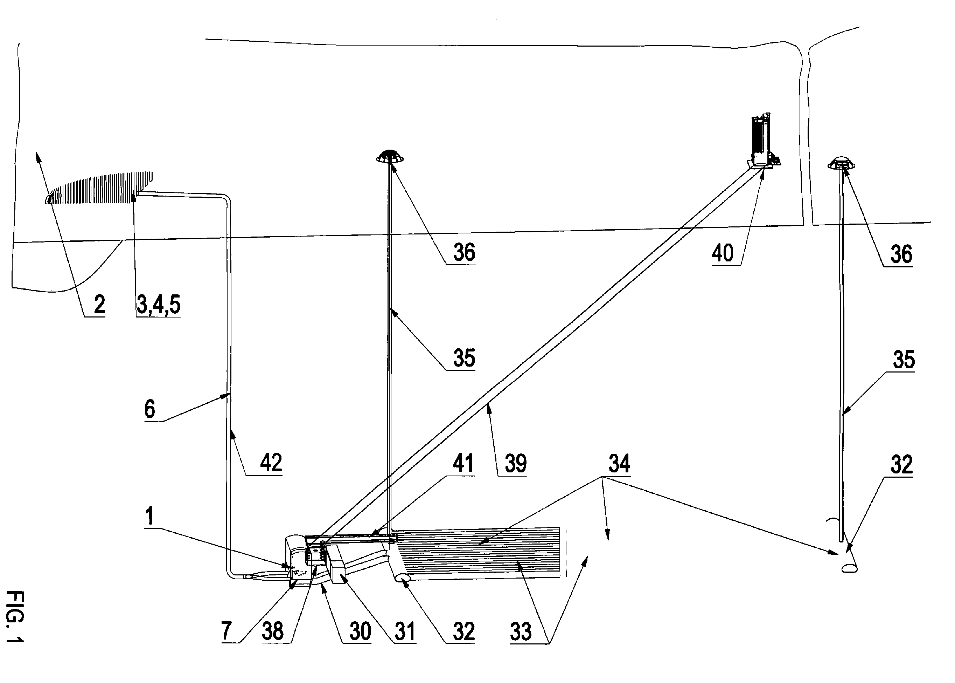

The figure for annotation contains the complete layout of the individual objects of the underground pumped storage power plant
- FIG. 1: The complete layout of the individual objects of the underground pumped storage power plant.

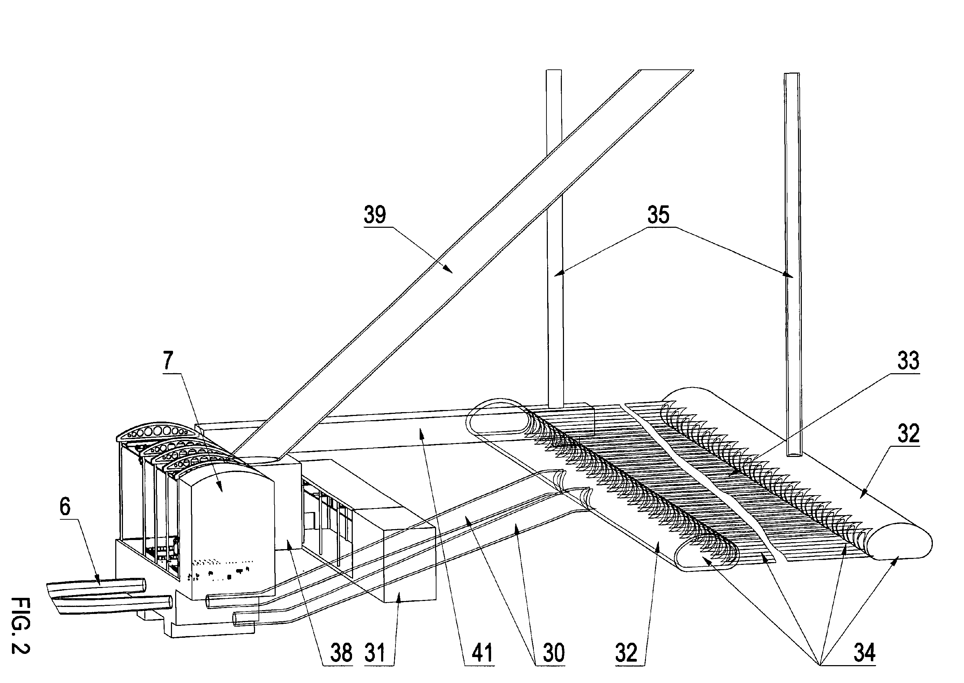

- FIG. 2: Detail of the underground objects

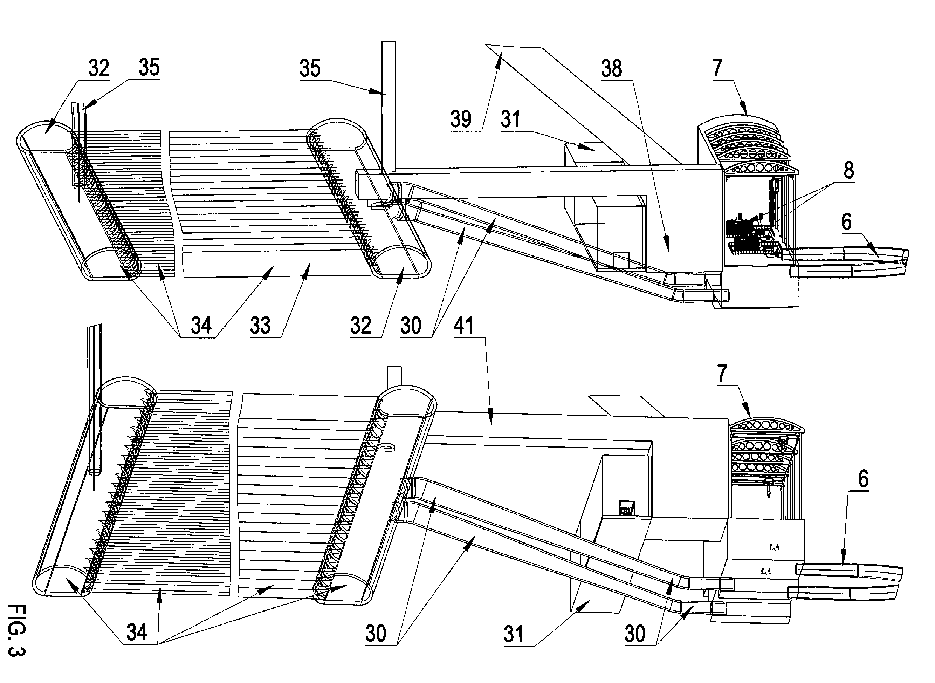

- FIG. 3: The underground objects - top and bottom view

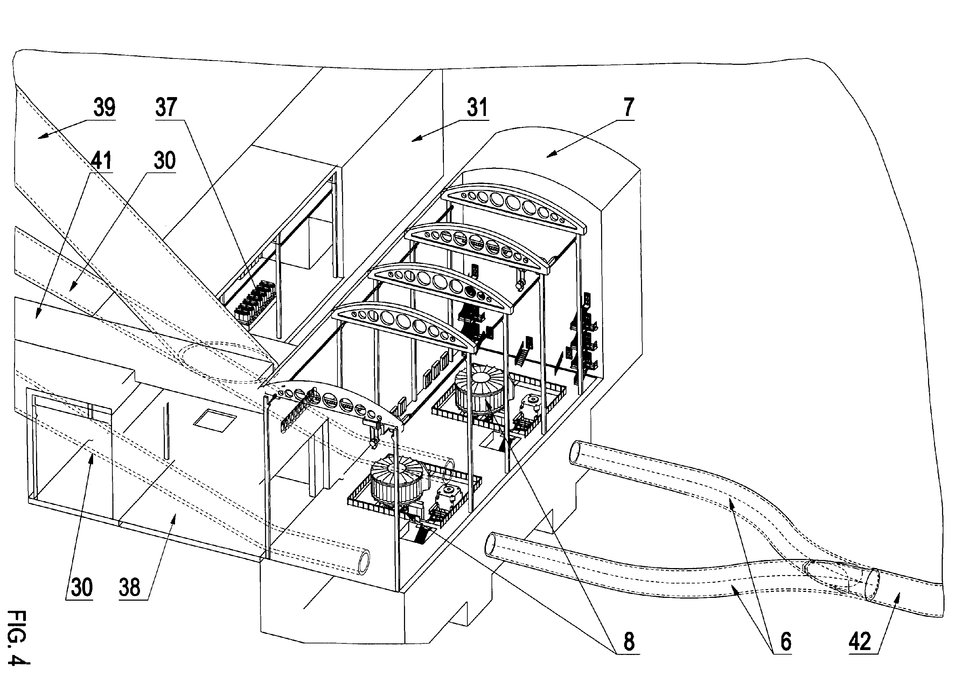

- FIG. 4: The machine hall with the inside equipment, transformer sub-station room with the inside equipment, corridor and access corridor with the inside equipment

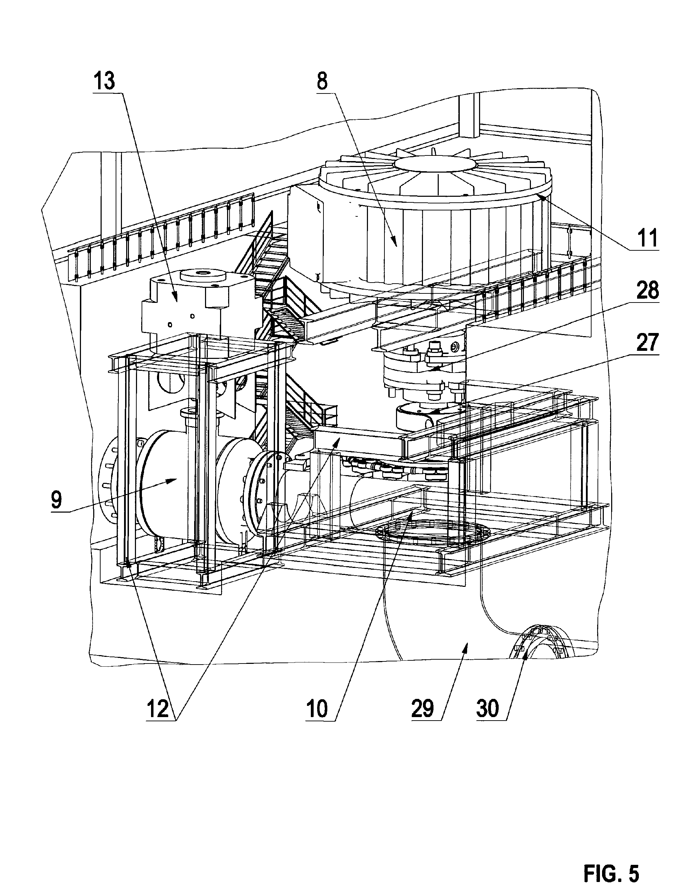

- FIG. 5: The Francis turbine machine set in the installation

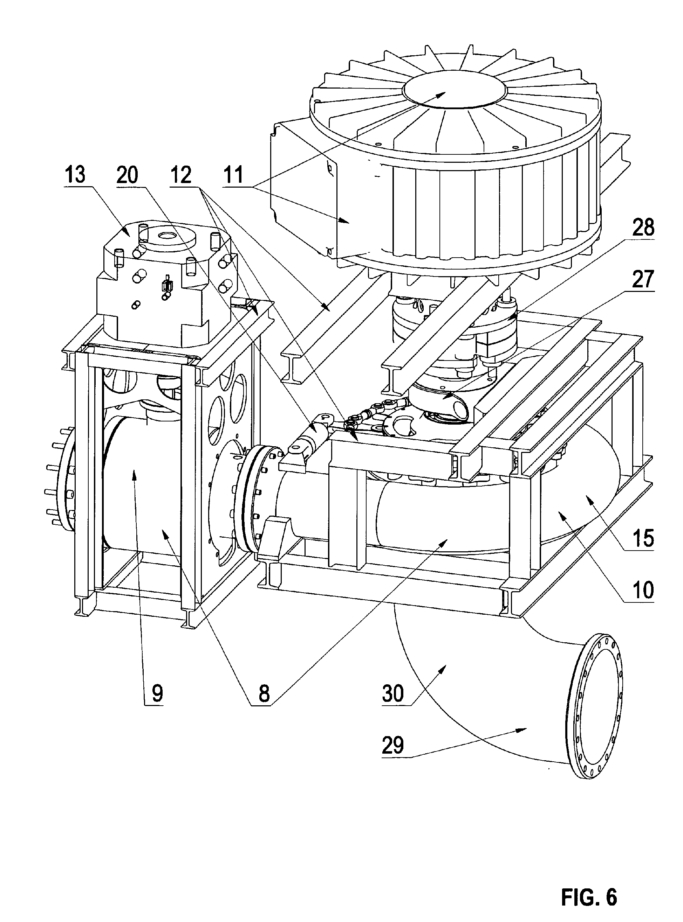

- FIG. 6: The Francis turbine machine set in the frame

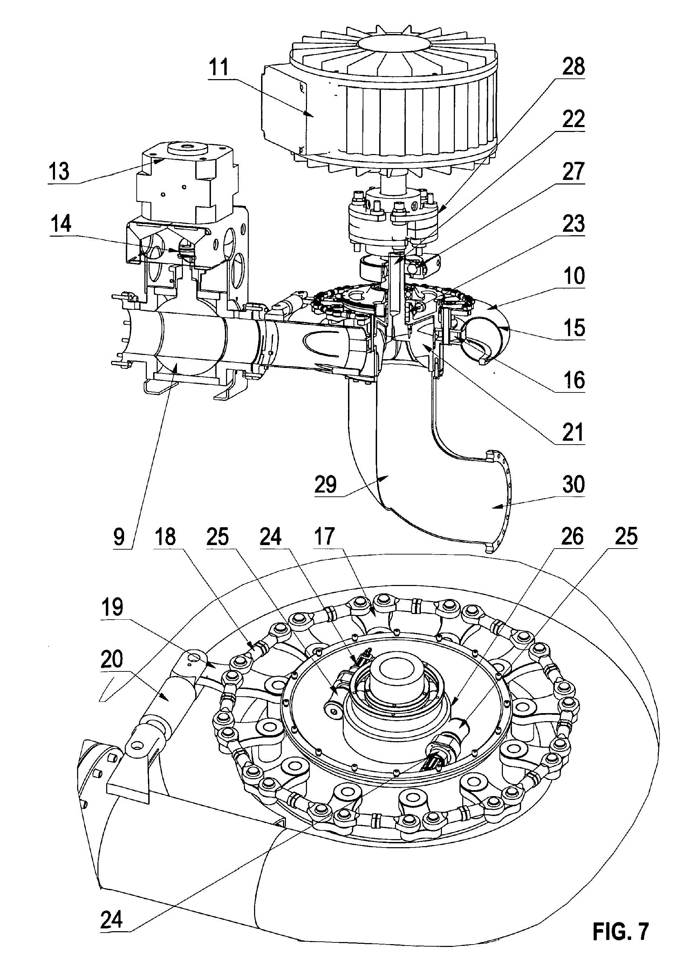

- FIG. 7: Sectional view of the Francis turbine machine set, in the bottom view there is the control and mechanical distribution of controlling the guiding paddles and a method of adjusting the tightness of the fillings

### An example of the invention variant

A basic feature of an underground pumped storage power plant 1 is a upper water tank 2 of some existing large hydroelectric dam or natural water reservoir where there is a suitable location used to treat the water for its drainage through hecks 3 and safety barriers 4, including gate valve 5, from where the water is taken through supply pipeline 6 in decline under the natural surface or in another manner and then vertically or down-hill to the machine room 7, to the machine set 8 of the pumped-storage_Francis turbine.

The basic sub-sets of the of the pumped-storage Francis turbine machine set 8 of an underground pumped storage power plant 1 are a ball valve 9, pumped-storage Francis turbine 10 and a motor generator 11 laid in a frame 12.

The the ball valve 9 is controlled by rotational drive 13 through an expansion joint 14. The pumped-storage Francis turbine 10 is connected with the ball valve 9 via flanges and then is then followed by a distribution spiral 15, with guiding paddles 16 laid in its inner part circinately and their arms 17 are connected with connecting rods 18, with one of them, a drive arm 19, is extended and in a swinging way connected with a linear hydraulic drive 20, on the opposite side attached on the distribution spiral 15.

Another essential part of the pumped-storage Francis turbine 10 is a runner wheel 21 firmly connected with a vertical shaft 22 sealed with a filling 23, and its adjustment is done by two linear rotational drives 24, while each of them includes a globoid worm 25, engaged with a tightening nut with toothing 26. The vertical shaft 23 of the pumped-storage Francis turbine 10 is laid in a rotational way in a frame 12 in bearings 27 and it is connected through a starting clutch 28 with an electric motor generator 11. It is axially followed in the bottom part of the pumped-storage Francis turbine 10 by a bend of the waste pipeline 29. The water leaves the machine hall 7 via the waste pipeline 30 under the transformer sub-station room 31 and runs to the first connecting tunnel 32, from where it flows to the individual fields 33 of the underground tank 34 which is connected with the surface atmosphere via the ventilating shafts 35 with an outfall to a ventilating object 36. Next to the machine room 7 there is the transformer sub-station room 31 with transformers 37 connected with the machine room 7 by a corridor 38 in its bottom floor, with an access tunnel 39 running to its top floor, and the other side of the tunnel is led to the surface to the area of the shaft tower 40. The top floor fo the corridor 38 is extended to the first connecting tunnel 32 via the access corridor 41. Mobile connection of the machine room 7 and transformer sub-station room 31 with the surface is done via the access tunnel 39 and on the other side it is led to the surface to the area of the shaft tower 40.

The underground tank bottom 34 is located above the top level of the runner wheel of the pumped-storage Francis turbine 10 so that the turbine is constantly loaded, which makes possible also the opposite process of acquiring the electrical energy, with the motor generator 11 working in motoric mode and the water is expelled by the pumped-storage Francis turbine 10 to the upper water reservoir 2, allowing the desired accumulation of the energy.

The power branch 42 in line of supply pipeline 6, pumped-storage Francis turbine machine set 8 and the waste pipeline 31 can be multiplied for the purpose of increasing the power, in our specific case there are two branches in the bottom part. Next to the machine room there is the transformer sub-station room 36 connected with the machine room 7 by a corridor 38, with an access tunnel 39 running into it.

### Functions

The underground pumped storage power plant 1 uses with an advantage some of the existing upper large water tanks 2, the natural terrain decline may be used as well and then it is suitable, in order to increase the pressure on the turbine, to create a space for the underground tank 34in the required depth. On a suitable place in the upper water tank 2 some alterations are made for building the hecks 3, safety barriers 4 and a gate valve 5, from where the supply pipeline 6 is taken, first copying the landscape surface, and then, on a proper location, after reaching the maximum height difference the supply pipeline 6 is turned to a steep or skew angle so that the biggest depth can be reached within the shortest length with the maximum pressure increase.

The supply pipeline 6, with a diameter optimized for losses as low as possible, runs to the machine room 7, the pressure water flows through the ball valve 9 with the secured safety locking protection represented by the rotational drive 13 operating via the expansion joint 14, and after the pressure water flows through guiding paddles 16 of the distribution spiral 15 and runner wheel 21 of the pumped-storage Francis turbine 10 it gets to the waste pipeline 30, and from here it runs to the connecting tunnel 32, and from here it flows to the individual fields 33 of the underground tank 34; its filling up is allowed by the existence of a ventilating shaft 35 with the outfall on the surface to the ventilating object 36. The output of the pumped-storage Francis turbine 10 is controlled by adjusting the guiding paddles 16, synchronized by connecting rods 18 on the arms 17 that are part of the paddles 16. One of the arms - the arm 16 is extended and controlled by the a linear hydraulic drive 20, in a swinging way attached to the distribution spiral 15.

The pumped-storage Francis turbine machine set 9 is placed into a massive frame 12 and consists of the ball valve 9 and its accessories, followed by the distribution spiral 15 of the pumped-storage Francis turbine 10 attached via flanges, with the runner wheel 21 in its axis firmly connected with a vertical shaft 22 with fillings 23 in its lower part against the water pressed by the tightening nut with toothing controlled by globoid worms 25 that are part of the two rotational drives 24. The vertical shaft 22 is is laid in a rotational way in a frame 12 in bearings 27 and it is followed by a starting clutch 28 as the input and protection feature of the motor generator 11.

The pumped-storage Francis turbine machine set 9 is located in the machine room 7, next there is the transformer sub-station room 31 with transformers 37, connected with the machine room 7 by a corridor 38, with an access tunnel 39 running into it on the top floor, leading to the shaft tower 40 on the surface. The extended top floor of the corridor 38 creates the access corridor 41, allowing to connect the halls of the machine room 7 and transformer sub-station room 31 with the underground tank 34 for the purpose of inspections, cleaning, repairs etc.

The machine rooms 7 and transformer sub-station rooms 31 have a mobile connection with the surface is done via the access tunnel 39 and on the other side it is led to the surface to the area of the shaft tower 40.

The underground tank bottom 34 is located above the top level of the runner wheel of the pumped-storage Francis turbine 10 so that the turbine is constantly loaded, which makes possible also the opposite process of acquiring the electrical energy, with the motor generator 11 working in motoric mode and the water is expelled by the Francis turbine 10 to the upper water reservoir 2, allowing the desired accumulation of the energy.

In order to increase the total energy output capacity the branch of supply pipeline 6, pumped-storage Francis turbine 10 and waste pipeline 30 can be multiplied - usually there are two branches, just like in our specific case.

### Industrial Use

The invention can be applied anywhere where it is required to supply the public grid quickly and accurately with the power, which is necessary especially in areas of nuclear power plants as their output is difficult to control, also in areas with increased power generation from the renewable sources, e.g. wind energy, sun etc., and finally also in areas with increased power consumption.

The exceptional contribution of the invention is the possibility to build the suggested pumped storage systems in a landscape without any altitude differences, with the advantageous use of especially large hydroelectric dams as upper retention tanks, with the advantageous use of mined rocks for building purposes, also with the advantage of preventing any devastation of the landscape on the surface of the pumped storage system and with the advantage of a significant increase of locations where the underground pumped storage systems can be built.

## Claims

1. The underground pumped storage power plant created using a water tank of an existing large hydroelectric dam where there is a suitable location altered for water drainage through technological units of the input supply and safety features to the operation area with the machine room of the output machine set containing the pumped-storage Francis turbine and transformer sub-station room for the power generation and also containing the service access, ventilating and safety technological features, **characteristic by the following**
supply of the operation water medium containing the input supply and safety features to the operation area consists of and runs through heks (3), safety barrier (4) and gate valve, (5) supply pipeline (6) in decline under the natural surface and then vertically to the machine room (7), while this machine room (7), where there is the location of the pumped-storage Francis turbine machine set (8) is followed by the waste pipeline (30) to the connecting tunnel (32), from where the water flows to the individual fields (33) of the underground tank (34), with the underground tank bottom (34) is located above the top level of the runner wheel of the pumped-storage Francis turbine (10) for constant load on the operating turbine, where the tunnel (32) is connected with the surface atmosphere via the ventilating shafts (35) with an outfall to a ventilating object (36), while the machine room (7) is further connected by a corridor (38) with with a transformer sub-station room (31) with transformers (37), and the transformer sub-station room (31) is connected with an access tunnel (39), serving as a mobile connection of the machine room (7) and transformer sub-station room (31), and which is on the other side led to the surface to the area of the shaft tower (40), while a corridor (38) is extended to the first connecting tunnel (32) by an access corridor (41), so the machine room (7) is connected by this access corridor (41) and following ascending ventilating shaft (35) with a ventilating object (3), while the basic sub-sets of the pumped-storage Francis turbine machine set (8) of an underground pumped storage power plant (1) are a ball valve (9), pumped-storage Francis turbine (10) and motor generator (11) that are laid in a frame (12), with the ball valve (9) controlled by rotational drive (13) through an expansion joint (14), while the pumped-storage Francis turbine (10) which is connected with the ball valve (9) via flanges is then followed by a distribution spiral (15), with guiding paddles (16) laid in its inner part circinately and their arms (17) are connected with connecting rods (18), with one of them, a drive arm (19) is extended and in a swinging way connected with a linear hydraulic drive (20), on the opposite side attached on the distribution spiral (15), while the pumped-storage Francis turbine (10) also includes a runner wheel (21) firmly connected with a vertical shaft (22) sealed with a filling (23), and its adjustment is done by two linear rotational drives (24), while each of them includes a globoid worm (25), engaged with a tightening nut (26) with toothing, while the vertical shaft (22) of the pumped-storage Francis turbine (10) is laid in a rotational way in a frame (12) in bearings (27) and it is connected through a starting clutch (28) with an electric motor generator (11), while it is axially followed in the bottom part of the pumped-storage Francis turbine (10) by a bend of the waste pipeline (29).

2. The underground pumped storage power plant **characteristic by the following:**
the supply pipeline (6), pumped-storage Francis turbine machine set (8) and the waste pipeline (31) make a power branch (42) and there may be more such power branches (42) for the purpose of increasing the power.
